# EUROPEAN PATENT SPECIFICATION

(11) **EP 4 240 136 B1**
(45) Date of publication and mention of the grant of the patent: **13.05.2026**
(21) Application number: 20960473.5
(22) Date of filing: 09.11.2020
(51) Int. Cl.: A01D 34/00, B25F 5/00, A01D 34/82, A01D 34/73, A01D 34/416

(54) **SYSTEMS AND METHODS FOR TOOL-FREE GARDEN MACHINE DETACHABLE IMPLEMENT CHANGE**
SYSTEME UND VERFAHREN FÜR DEN WECHSEL VON WERKZEUGLOSEN, LÖSBAREN GERÄTEN EINER GARTENMASCHINE
SYSTÈMES ET PROCÉDÉS DE CHANGEMENT D'ACCESSOIRE DÉTACHABLE DE MACHINE DE JARDINAGE SANS OUTIL

(43) Date of publication of application: 13.09.2023
(73) Proprietor: Techtronic Cordless GP, Anderson, SC 29621 (US)
(72) Inventor: LUO, Heng, Dongguan, Guangdong (CN)
(74) Representative: Zimmermann & Partner Patentanwälte mbB
(86) International application number: PCT/CN2020/127460
(87) International publication number: WO 2022/095015

(56) References cited:
- CN-A- 105 612 905
- CN-A- 105 612 905
- CN-U- 207 560 769
- CN-U- 208 113 341
- CN-U- 208 113 341
- CN-U- 208 446 047
- CN-U- 210 183 903
- GB-A- 440 687
- JP-A- 2015 123 070
- US-A1- 2005 155 227
- US-A1- 2005 155 227
- US-A1- 2007 180 704

## Description

### TECHNICAL FIELD

The present invention relates generally to garden machines having detachable implements and, more particularly, to techniques facilitating installation and/or removal of detachable implements with respect to a host garden machine without aid of separate tools.

### BACKGROUND OF THE INVENTION

Various configurations of garden machines are commonly used in performing routine tasks in daily life. For example, garden machines such as lawn mowers, string trimmers, grass edgers, chainsaws, etc. are used every day by persons performing work and leisure related tasks. These garden machines often comprise a motor of some form (e.g., electric motor or internal combustion motor) outputting power via a shaft which drives an implement configured for the related task. As examples, a lawn mower may drive an implement in the form of a grass cutting blade, a string trimmer may drive an implement in the form of string spool head, a grass edger may drive an implement in the form of an edging blade, and a chainsaw may drive an implement in the form of a bar and chain.

An implement may be configured to be detachable from a host garden machine. For example, detachable implements may be utilized to accommodate selection of an implement configuration for a particular task (e.g., selectively installing a grass cutting blade configured for mulching or clipping collection, etc.) and/or to facilitate replacing or repairing a damaged implement (e.g., removal and reinstalling a grass cutting blade after sharpening its previously dulled edges or replacing a dull grass cutting blade with a sharp grass cutting blade, etc.).

Typically, one or more tools are required for changing (e.g., removing and/or installing) a detachable implement. For example, a hand tool in the form of a wrench (e.g., open-end wrench, socket wrench, or adjustable wrench) in the appropriate size for engaging a fastener affixing the implement to a shaft assembly of the garden machine is needed for changing a detachable implement. Additionally, a hand tool in the form of a brace or second wrench is often needed to prevent movement of the shaft and implement when tightening or loosening the fastener affixing the implement to a shaft assembly of the machine for changing the detachable implement.

Garden machines having detachable implements are often operated in areas away from repair facilities or places in which it is convenient or customary to store tools appropriate to changing detachable implements. For example, a lawn mower may be operated in a home environment in which the owner has a very limited selection of tools, and thus appropriately sized hand tools for changing a detachable implement may not be available to the operator. In another example, a lawn mower may be operated in a field or other large parcel of land relatively far from a supply of tools and, although a replacement grass cutting blade may be carried by the operator, sufficient tools for changing the grass cutting blade may not be available. In a similar example, a chainsaw may be operated in forest relatively far from a supply of tools and, although a replacement bar and/or chain may be carried by the operator, sufficient tools for changing a damaged bar and chain may not be available. Accordingly, it is often inconvenient and sometimes even impossible to change a detachable implement despite the implement having been configured for detachment and reattachment.
CN 105 612 905 A describes a lawn-trimmer and brush-cutter mechanism in which a springloaded stop post on the motor cover engages a Y-shaped groove on the rotor to hold it stationary. This rotor lock aims to facilitate the tool-free removal or attachment of the cutting head.
US 2005/155227 A1 describes a spring-biased, elongated locking member that slides through recesses in the motor housing and gearbox casting; when the external end is pressed, its half-hex locking portion engages a hexagonal bushing press-fit on the armature shaft to stop rotation. Releasing the pressure lets the spring return the member to its unlocked position, allowing tool-free shaft locking for blade changes.

### BRIEF SUMMARY OF THE INVENTION

The present invention is directed to systems and methods which provide for tool-free detachable implement change. In accordance with embodiments of the present invention, changing (e.g., installation and/or removal) of detachable implements with respect to a host garden machine is facilitated through the use of a tool-free implement change mechanism without aid of separate tools. Tool-free implement change mechanisms of embodiments may, for example, be provided for use in changing various implements, such as grass cutting blades, string spool heads, leaf blowers, cultivators, hedge trimmer blades, brush cutters, edging blades, bars and chains, etc., attached/attachable to the motor assemblies of corresponding garden machines (e.g., lawn mowers, string trimmers, grass edgers, chainsaws, etc.).

A tool-free implement change mechanism of embodiments of the invention may comprise one or more apparatuses configured to facilitate installation and/or removal of detachable implements with respect to a host garden machine without aid of separate tools. For example, a tool-free implement change mechanism may comprise a motor shaft locking apparatus and/or an implement securing apparatus. An implement securing apparatus of embodiments is configured for affixing detachable implements to a motor shaft assembly of a host garden machine without aid of separate tools. In operation according to embodiments, a motor shaft locking apparatus of embodiments may be engaged to prevent movement of motor shaft (and, correspondingly, the detachable implement) when tightening or loosening an implement securing apparatus used for affixing the detachable implement to the shaft assembly.

In accordance with embodiments of the invention, the apparatuses of a tool-free implement change mechanism are configured for hand-actuation to thereby facilitate their operation without aid of separate tools. For example, an implement securing apparatus of a tool-free implement change mechanism may comprise a hand-actuated implement securing apparatus, such as may comprise one or more manually operated releases for controlling interfacing of the implement securing apparatus with a shaft assembly. The shaft assembly of a host garden machine may be correspondingly configured for controlling interfacing of the implement securing apparatus. A motor shaft locking apparatus of a tool-free implement change mechanism comprises a hand-actuated motor shaft locking apparatus and one or more manually operable lockers for engaging a portion of the shaft assembly of a host garden machine to discourage shaft rotation. In accordance with some embodiments, a motor shaft locking apparatus of a tool-free implement change mechanism may comprise one or more lockers configured to automatically engage a portion of the shaft assembly of a host garden machine. Irrespective of the motor shaft locking apparatus being configured for manual and/or automatic engagement of a portion of the shaft assembly, the portion of the shaft assembly is correspondingly configured for engagement by the motor shaft locking apparatus to discourage shaft rotation.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:
FIGURE 1 shows a portion of a garden machine for which a tool-free implement change mechanism is provided according to embodiments of the present invention; and
FIGURES 2-5 show portions of a lawn mower configuration of the garden machine of FIGURE 1 for which a tool-free implement change mechanism is provided according to embodiments of the present invention.

### DETAILED DESCRIPTION

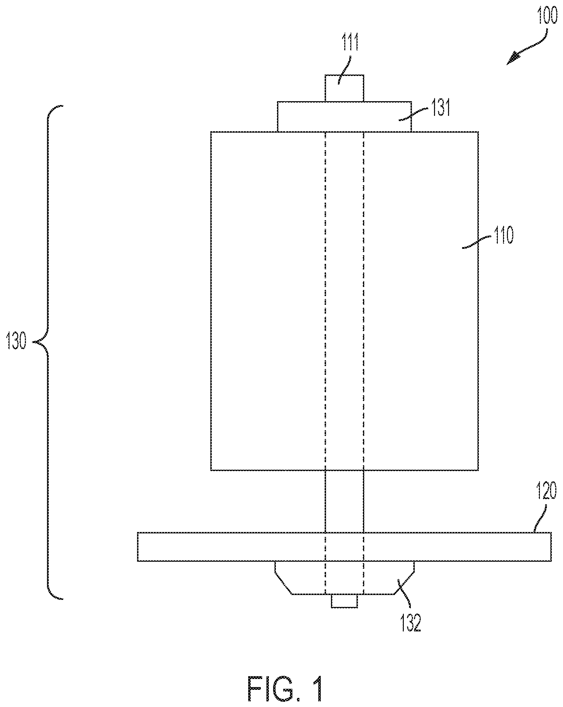

FIGURE 1 shows a portion of a garden machine configured to utilized detachable implements, wherein a tool-free implement change mechanism is provided to facilitate changing (e.g., installation and/or removal) of the detachable implements without aid of separate tools according to embodiments of the present invention. Garden machine 100 may comprise various configurations of garden machines configured for performing one or more tasks using corresponding configurations of detachable implement 120. By way of example, garden machine 100 of some embodiments may comprise a lawn mower and detachable implement 120 may comprise a grass cutting blade (e.g., low lift/side-discharge blade, mulching blade, dethatching blade, etc.). In accordance with other embodiments, garden machine 100 and detachable implement 120 may comprise configurations of a string trimmer and string spool head, leaf blower, cultivator, hedge trimmer blade, and/or brush cutter attachments, a grass edger and edging blade, a chainsaw and bar and chain, etc.

In the example of FIGURE 1, garden machine 100 comprises motor assembly 110 driving detachable implement 120. Motor assembly 110 of embodiments may comprise various motor configurations. For example, motor assembly 110 of some embodiments may comprise an electric motor, such as a direct current (DC) motor (e.g., brushed motor, brushless motor, etc.) or alternating current (AC) motor (e.g., induction motor, synchronous motor, etc.), powered by batteries, main lines, solar collector, generator, etc. In accordance with some embodiments, motor assembly 110 may comprise an internal combustion motor, such as a gasoline engine or diesel engine, powered by a combustible fuel source.

A shaft assembly of motor assembly 110 is utilized to drive detachable implement 120 in operation of garden machine 100. Accordingly, in the example of FIGURE 1, detachable implement 120 is coupled to a first end of shaft 111 shown passing through the main body of motor assembly 110. It should be appreciated that, although not shown in FIGURE 1, the shaft assembly may comprise structure in addition to shaft 111. For example, a shaft assembly of motor assembly 110 may include a mounting or backer plate affixed to shaft 111 for interfacing with detachable implement 120. As another example, shaft assembly of motor assembly 110 may include drive gearing and/or a transmission (e.g., providing speed and/or direction control). Irrespective of the particular structure of the shaft assembly of motor assembly 110, detachable implement 120 is removably coupled (e.g., directly or indirectly) to shaft 111 for receiving power from motor assembly 110 in operation of garden machine 100.

Tool-free implement change mechanism 130 of embodiments of the invention is shown in the example of garden machine 100 for facilitating changing of detachable implement 120 without aid of separate tools. Tool-free implement change mechanism 130 of the illustrated embodiment includes motor shaft locking apparatus 131 and implement securing apparatus 132 configured to facilitate installation and/or removal of detachable implement 120 with respect to garden machine 100. As described in detail with respect to the examples below, implement securing apparatus 132 of embodiments may be configured for affixing detachable implement 120 to a motor shaft assembly of garden machine 100 without aid of separate tools. Also as described in detail with respect to the examples below, motor shaft locking apparatus is engaged without aid of separate tools to prevent movement of shaft 111 when affixing detachable implement 120 to shaft 111. In accordance with some embodiments, motor shaft locking apparatus 131 may be operable in cooperation with implement securing apparatus 132 to facilitate affixing detachable implement 120 to or removing detachable implement 120 from the motor shaft assembly of garden machine 100 without the use of additional tools. In operation of tool-free implement change mechanism 130, an operator of garden machine 100 may install and/or remove detachable implement 120 by engaging motor shaft locking apparatus 131 (e.g., through manual manipulation or automatic engagement) and loosening or tightening implement securing apparatus 132 through manual manipulation.

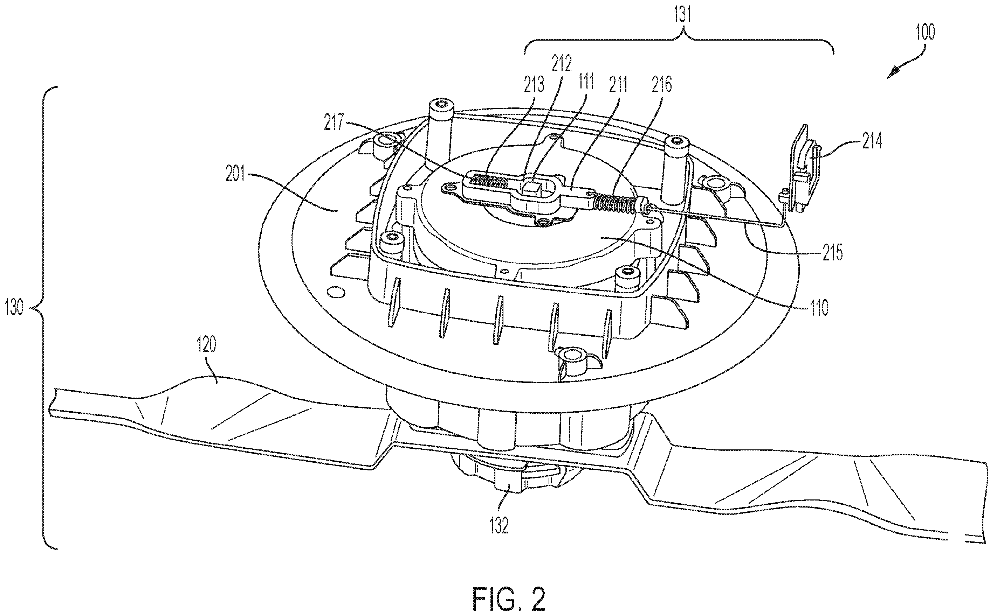

FIGURES 2-5 show an example embodiment in which garden machine 100 comprises a lawn mower and detachable implement 120 comprises a grass cutting blade. Such an example embodiment of garden machine 100 is described below in order to aid in understanding concepts of the present invention. It should be appreciated, however, that embodiments of tool-free implement change mechanism 130 may be provided with respect to various configurations of garden machines, such as string trimmers, grass edgers, chainsaws, etc., for facilitating changing of various configurations of detachable implements, such as string spool heads, leaf blowers, cultivators, hedge trimmer blades, brush cutters, edging blades, bars and chains, etc.

Referring first to FIGURE 2, a portion of a lawn mower configuration of garden machine 100 is shown from the top of the lawn mower, wherein the bottom of motor assembly 110 is visible through motor mount housing 201. Motor mount housing 201 may, for example, be configured for attaching to a mower deck (not shown) of the lawn mower and to hold motor assembly 110 in place with a top portion of motor assembly 110 facing down. In this orientation, a first end of shaft 111 may extend below the mower deck and couple to grass cutting blade configurations of detachable implement 120 to provide grass cutting operation. Tool-free implement change mechanism 130, including motor shaft locking apparatus 131 and implement securing apparatus 132, is provided in the example lawn mower configuration of garden machine 100 for facilitating changing of the grass cutting blade configurations of detachable implement 120 without aid of separate tools.

Motor shaft locking apparatus 131 of the illustrated embodiment is configured for locking shaft 111 from rotation to facilitate installation and/or removal of detachable implement 120. Accordingly, motor shaft locking apparatus 131 of the example of FIGURE 2 is shown disposed to interface with a portion of shaft 111. For example, locker 211 of motor shaft locking apparatus 131 is shown as disposed in juxtaposition with a portion of shaft 111.

In the illustrated example, a second end of shaft 111 extends from the bottom of motor assembly 110, wherein locker 211 of motor shaft locking apparatus 131 is disposed in juxtaposition with a portion of shaft 111 at this second end. It should be appreciated, however, that motor shaft locking apparatus 131 may be disposed in different or alternative locations with respect to shaft 111 according to some embodiments of the invention. For example, motor shaft locking apparatus 131 may be disposed in a position at the top of motor assembly 110, such as to place locker 211 in juxtaposition with a portion of shaft 111 extending between the first end interfaced with detachable implement 120 and a motor housing of motor assembly 110. Moreover, although a single instance of motor shaft locking apparatus 131 (and components thereof) are shown, embodiments of the invention may implement multiple instances of a motor shaft locking apparatus (or components thereof). For example, a first instance of motor shaft locking apparatus 131 may be disposed at the bottom of motor assembly 110 and a second instance of motor shaft locking apparatus 131 (or some components thereof) may be disposed at the top of motor assembly 110.

Locker 211 of motor shaft locking apparatus 131 is configured to interface with a portion of shaft 111 for discouraging rotation of the shaft. In operation according to embodiments, motor shaft locking apparatus 131 is configured to allow free rotation (i.e., unimpeded by motor shaft locking apparatus 131) of shaft 111 when motor shaft locking apparatus 131 is disengaged. However, motor shaft locking apparatus 131 is configured to discourage rotation (e.g., prevent or substantially impede) of shaft 111, and correspondingly detachable implement 120, when engaged for facilitating installing and/or removing detachable implement 120.

Locker 211 of the illustrated embodiment of motor shaft locking apparatus 131 includes wide slot section 212 and narrow slot section 213 configured for selectively allowing and discouraging rotation of shaft 111. In operation according to embodiments of the invention, when shaft 111 is within wide slot section 212, shaft 111 and locker 211 do not interface and shaft 111 is free to rotate. However, when shaft 111 is within narrow slot section 213, shaft 111 and locker 211 interface and shaft 111 is discouraged from rotation. Accordingly, shaft 111 of embodiments may be configured for interfacing with locker 211 for discouraging rotation of the shaft. For example, a portion of shaft 111 disposed in juxtaposition with locker 211 may be provided with a square cross-section configured to cooperate with narrow slot section 213 of locker 211 to discourage rotation of shaft 111 when motor shaft locking apparatus 131 is engaged. Correspondingly, the portion of shaft 111 disposed in juxtaposition with locker 211 is configured to be compatible with wide slot section 212 for allowing free rotation of shaft 111 when motor shaft locking apparatus 131 is disengaged.

It should be appreciated that, although the foregoing example of locker 211 is described with respect to a narrow and wide slot configuration for selectively allowing and discouraging rotation of shaft 111, embodiments of the invention may utilize additional or alternative configurations for lockers of motor shaft locking apparatus 131. For example, locker implementations of embodiments may utilize clamps, grippers, ratchets, open-ended tines, etc. for interfacing with a portion of shaft 111 to selectively discourage rotation. A portion of shaft 111 disposed in juxtaposition with such locker configurations may be provided with one or more features (e.g., grippable or non-slip surface, teeth or ratchet catch, mating surface shape, etc.) configured to cooperate with the locker to discourage rotation of shaft 111 when motor shaft locking apparatus 131 is engaged and compatible with allowing free rotation of shaft 111 when motor shaft locking apparatus 131 is disengaged.

In operation of motor shaft locking apparatus 131 illustrated in FIGURE 2, locker 211 can move relative to shaft 111 for interfacing/de-interfacing with the shaft to selectively discourage and allow rotation of the shaft. Accordingly, motor shaft locking apparatus 131 of embodiments includes an actuator assembly for controlling movement of locker 211 relative to shaft 111. The actuator assembly implemented according to embodiments of the invention may be configured for manual manipulation or automatic operation to engage and disengage motor shaft locking apparatus 131.

An actuator assembly of motor shaft locking apparatus 131 in the example of FIGURE 2 includes actuator 214 coupled to locker 211 via pull wire 215 and tension spring 216. Actuator 214 may, for example, comprise a slider, pivot handle, pull handle, etc. configured to apply tension to pull wire 215 when manipulated by an operator. Actuator 214 of embodiments may be disposed on garden tool 100 in any convenient location for manual operation by an operator for controlling activation of motor shaft locking apparatus 131 providing the requisite communication between actuator 214 and locker 211 via pull wire 215 and tension spring 216.

In accordance with some embodiments, motor shaft locking apparatus 131 may be automatically engaged, such as upon powering off of the motor, upon cessation of rotation of shaft 111, etc. Accordingly, motor shaft locking apparatus 131 of embodiments may comprise one or more lockers configured to automatically engage a portion of the shaft assembly of a host garden machine. For example, a servo or other electrically controlled actuator may be coupled to locker 211, such as via pull wire 215 and tension spring 216, to facilitate moving locker 211 relative to shaft 111 for interfacing/de-interfacing with the shaft upon powering off/powering on garden machine 100. As another example, a centrifugal slide mechanism may be implemented with respect to locker 211 facilitate interfacing of locker 211 with shaft 111 after cessation of rotation of the shaft. Such a centrifugal slide mechanism may be implemented in combination with a manual (e.g., using actuator 214 coupled to pull wire 215 and spring 216) or automatic (e.g., servo or other electrically controlled actuator) release to facilitate de-interfacing of locker 211 and shaft 111 upon operation of garden machine 100.

Locker 211 of embodiments is preferably configured to retain a disengaged configuration of motor shaft locking apparatus 131 (e.g., locker 211 remains in a position relative to shaft 111 wherein the shaft remains within wide slot section 212) when actuator 214 is not actuated. For example, motor shaft locking apparatus 131 of the embodiment illustrated in FIGURE 2 includes compression spring 217 (or other energy storage apparatus, such as elastomeric member, torsion spring, compressed gas actuator, etc.) configured to bias locker 211 away from interfacing with shaft 111. In accordance with some embodiments of the invention, compression spring 217 may be compressed between a surface of locker 211 (e.g., an end of narrow slot section 213) and a portion of the motor mount housing (e.g., a tab or other protuberance extending from a motor mount housing cover (not shown) attached to the top of motor mount housing 201, such as may be used to cover the bottom of motor assembly 110 and/or components of motor shaft locking apparatus 131). A bias provided by compression spring 217 being compressed may encourage locker 211 to remain in a position relative to shaft 111 where shaft 111 remains within wide slot section 212, and thus locker 211 is not interfaced with shaft 111. However, in operation according to embodiments, the bias of compression spring 217 may be overcome through force transferred via pull wire 215 and tension spring 216 (or other energy storage apparatus, such as elastic cord, torsion spring, elastomeric cable, etc.) when actuator 214 is actuated. Accordingly, motor shaft locking apparatus 131 may remain disengaged, wherein shaft 111 is free to rotate (e.g., locker 211 is positioned relative to shaft 111 such that the shaft is disposed in wide slot section 212) when actuator 214 is not actuated. However, manipulation of actuator 214 may cause locker 211 to move relative to shaft 111 resulting in narrow slot section 213 interfacing with the shaft and discouraging its rotation commensurate with motor shaft locking apparatus 131 being engaged.

It should be appreciated that there may be situations in which shaft 111 may be in a position so as to prevent or resist interfacing, or fully interfacing, with motor shaft locking apparatus 131 for discouraging rotation of the shaft. For example, shaft 111 may be radially positioned on occasion such that shaft 111 does not readily fit into the narrow slot section 213 (e.g., shaft 111 may be rotationally oriented such that the sides of the square cross-section are not sufficiently parallel to the inner surfaces of narrow slot section 213 to allow locker 211 to slide relative to the shaft to engage motor shaft locking apparatus 131). Accordingly, locker 211 of embodiments may become "jammed" with shaft 111 disposed at the transition between wide slot section 212 and narrow slot section 213 as force is applied to locker 211 by actuator 214.

The actuator assembly of motor shaft locking apparatus 131 may be configured to accommodate situations in which shaft 111 may not sufficiently align with locker 211 to result in motor shaft locking apparatus 131 becoming engaged. For example, tension spring 216 disposed inline with pull wire 215 of the illustrated embodiment may be configured to accumulate pulling force as actuator 214 is being actuated while locker 211 is "jammed" to nevertheless encourage locker 211 in a direction for narrow slot section 213 interfacing with shaft 111. Upon shaft 111 slightly rotating, the shaft may sufficiently align with locker 211 to allow the accumulated pulling force to encourage interfacing between locker 211 and shaft 111. For example, an operator of garden tool 100 may slightly rotate detachable implement 120, while actuator 214 is being actuated, to cause shaft 111 to come into alignment with locker 211. Additionally or alternatively, the transition between wide slot section 212 and narrow slot section 213 may be configured (e.g., tapered, sloped, etc.) to encourage slight rotation of shaft 111 to come into alignment with locker 211. As shaft 111 comes into alignment with locker 211, force accumulated by tension spring 216 of embodiments encourages relative movement of locker 211 to interface with the shaft and motor shaft locking apparatus 131 becomes engaged.

The locker and actuator assemblies of motor shaft locking apparatus 131 of embodiments of the invention may include features in addition to or in the alternative to the features of the examples above. For example, the actuator assembly may include latching apparatus (e.g., friction fit, latch, lock, catch, clasp, etc.) configured to hold the actuator in an actuated and/or non-actuated position. According to the invention, a safety interlock (e.g., power disconnect switch, ignition ground switch, etc.) is provided in communication with the locker to prevent operation of the motor when the motor shaft locking apparatus is engaged.

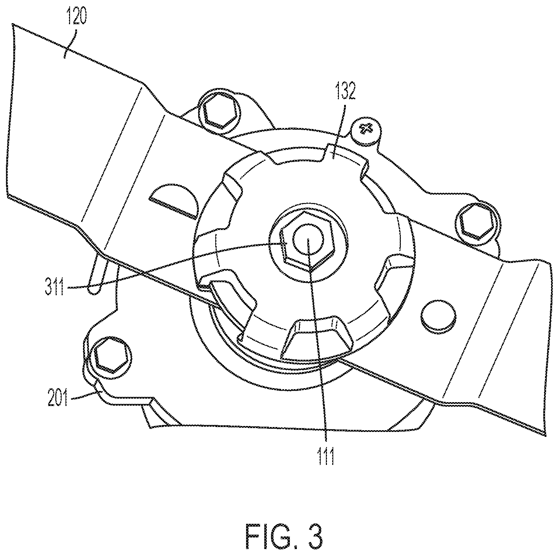

Referring now to FIGURE 3, a portion of the lawn mower configuration of garden machine 100 shown in FIGURE 2 is shown from the bottom of the lawn mower, wherein a first end of shaft 111 extending from the top of motor assembly 110 is visible. In the example of FIGURE 3, motor mount housing 201 (FIGURE 2) may be fastened to the top of a mower deck such that a portion of shaft 111 protrudes through the bottom of the mower deck portion in the example of FIGURE 3. Detachable implement 120 in the form of a grass cutting blade is shown coupled to the first end of shaft 111 in FIGURE 3, wherein implement securing apparatus 132 is configured for affixing detachable implement 120 to the shaft assembly.

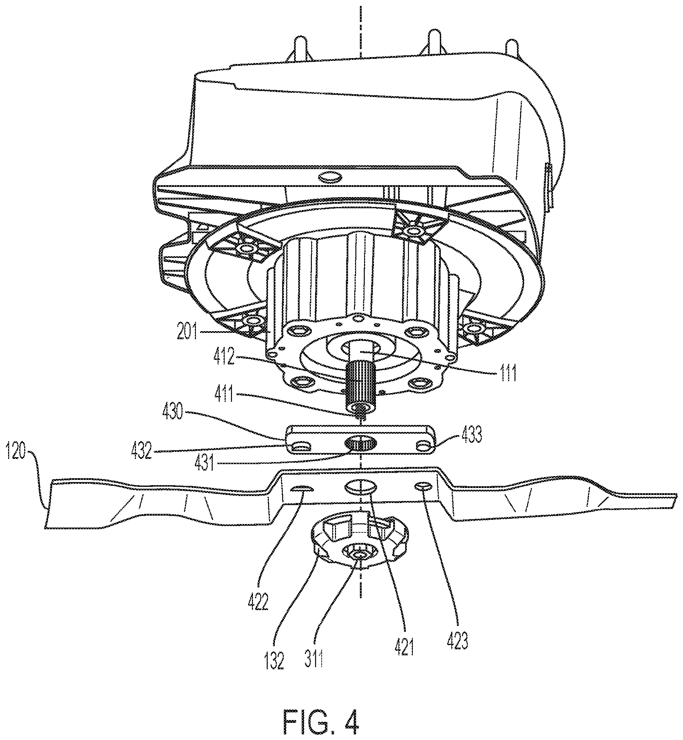

Implement securing apparatus 132 of the illustrated embodiment includes fastener 311 configured to interface with shaft 111 for affixing detachable implement 120 to the shaft assembly. Fastener 311 may, for example, be integral with or act on implement securing apparatus 132 for facilitating use of implement securing apparatus 132 in affixing detachable implement 120 to the shaft assembly. For example, a portion of the first end of shaft 111 may be configured for interfacing with fastener 311 sufficiently to hold detachable implement 120 and/or transfer power thereto from motor assembly 110 during use of garden tool 100. As shown in FIGURE 4, the first end of shaft 111 may comprise threaded portion 411, wherein fastener 311 may comprise a nut or other fastener having corresponding threads within a lumen therein. In accordance with the illustrated embodiment, detachable implement 120 may be disposed so that threaded portion 411 of shaft 111 extends through receiver 421 provided in the detachable implement and fastener 311 of implement securing apparatus 132 may be threaded onto threaded portion 411 of shaft 111 to affix the detachable implement to the shaft. By screwing fastener 311 to the shaft 111, detachable implement 120 of embodiments may be axially fixed to the shaft assembly by the clamping force by the lower edge of implement securing apparatus 132.

Shaft 111 of embodiments of the invention may be provided with one or more features in addition to the aforementioned fastener interface to facilitate affixing detachable implement 120 to the shaft assembly and/or transfer power to the detachable implement. For example, structures such as a backer plate, torque plate, thrust plate, etc. may be provided with respect to shaft 111 for use in affixing detachable implement 120 to the shaft assembly and/or transferring power to the detachable implement. In the illustrated example, torque plate 430 is configured to provide an additional interface between shaft 111 and detachable implement 120. A portion of the first end of shaft 111 may, for example, be configured for interfacing with torque plate 430 sufficiently to transfer power from motor assembly 110 to detachable implement 120 through torque plate 430 during use of garden tool 100. As shown in FIGURE 4, the first end of shaft 111 may comprise toothed portion 412, wherein torque plate 430 may comprise a lumen therein having corresponding teeth. In accordance with the illustrated embodiment, torque plate 430 may be disposed so that toothed portion 412 of shaft 111 extends through receiver 431 configured with corresponding teeth. It should be appreciated that other means for the transfer of torque through torque plate 430 may be used, such as by permanently adhering (e.g., by welding, adhesive, etc.) the torque plate to the shaft, use of another cross-sectional configuration (e.g., square, hexagonal, "D" shaped, etc.), use of a friction fit (e.g., pressed fitting), etc., or combinations thereof, for interfacing the torque plate with the shaft of embodiments. Irrespective of the particular technique used to interface torque plate 430 with shaft 111, detachable implement 120 may be disposed so that threaded portion 411 of shaft 111 extends through receiver 421 and the detachable implement may be position to interface with torque plate 430. For example, detachable implement 120 may be positioned so that tangs 432 and 433 provided on a face of torque plate 430 enter into corresponding receivers 422 and 423 provided in a face of detachable implement 120, whereby torque from the rotation of shaft 111 may be transferred to detachable implement via the tang/receiver interface.

In accordance with some embodiments of the invention, one or more features may be provided to facilitate affixing detachable implement 120 to shaft 111 in a proper orientation. For example, detachable implement 120 may comprise an implement configuration for which a particular face is to face away or toward motor assembly 110, is to be affixed in a particular radial orientation with respect to the shaft, etc. As one example, a grass cutting blade detachable implement 120 may comprise a mulching blade configuration in which airfoil surfaces are provided for creating air circulation within an area below the mower deck for repeated cutting of grass clippings. Proper operation of such a mulching blade configuration may depend upon a particular face of the blade facing the mower deck. One or more structures may be provided to facilitate such desired/proper orientation of detachable implement 120. For example, tangs 432 and 433 may each be provided in different sizes, shapes, locations, etc. to encourage a particular orientation of detachable implement 120 when affixed to shaft 111. As shown in the example of FIGURES 3 and 4, tang 432 is provided with a first shape (e.g., "D" shaped) while tang 433 is provided with a different second shape (e.g., round), whereby corresponding receivers 422 and 423 are likewise shaped such that detachable implement 120 may fully/properly interface with torque plate 430 in one orientation.

In accordance with embodiments of the invention, implement securing apparatus 132 is configured for installing or removing detachable implement 120, such as in association with motor shaft locking apparatus 131, without aid of separate tools. Accordingly, implement securing apparatus 132 of embodiments is configured for hand-actuation, such as being shaped to accommodate manipulation by hand and/or utilizing one or more manually operated releases for controlling interfacing of the implement securing apparatus with a shaft assembly. For example, the embodiment of implement securing apparatus 132 illustrated in FIGURES 3 and 4 is provided in a cap configuration sized and shaped for grasping by hand. The cap configuration of the illustrated embodiment of implement securing apparatus 132 is further adapted for facilitating manipulation by hand, such as to provide a manual twisting force for threading/unthreading threaded fastener 311 and threaded portion 411 of shaft 111. In particular, the cap configuration of implement securing apparatus 132 include crenulations for facilitating manual gripping.

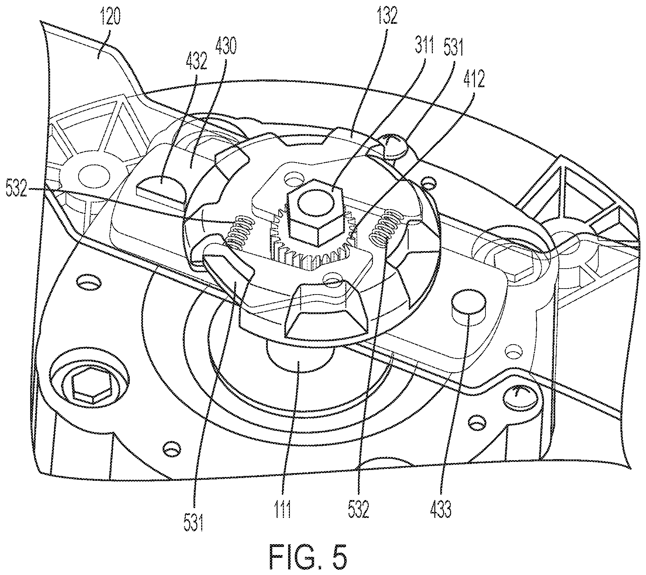

In providing for locking implement securing apparatus 132 onto shaft 111, and thus reliably securing detachable implement 120 thereto throughout operation of garden machine 100, one or more manually operated releases for controlling interfacing of the implement securing apparatus with a shaft assembly may be utilized. For example, as shown in FIGURE 5, releases for controlling interfacing of implement securing apparatus 132 with shaft 111 may include pawls 531 for lockedly engaging the shaft. Pawls 531 may be pivotably mounted within implement securing apparatus 132, whereby a portion thereof is manipulatable to engage/disengage the shaft. Shaft 111 may be correspondingly configured for controlling interfacing of implement securing apparatus 132. In the illustrated example, toothed portion 412 of shaft 111 provides a ratchet configuration for engagement by an end of pawls 531. Springs 532 may bias pawls 531 so that an end of the pawls interfaces with toothed portion 412 of shaft 111 until pawls 531 are pivoted (e.g., by manually depressing a portion of pawls 531 protruding from implement securing apparatus 132) against the bias of springs 532. Embodiments of the invention may utilize locking implementations in addition or in the alternative to the ratchet locking configuration of the illustrated example. For example, locking implementations utilized according to some embodiments may comprise a gear interface, a clutch, a sliding lock mechanism, and/or or other types of apparatus configured for lockedly discouraging loosening or disengagement of implement securing apparatus 132 from the shaft assembly of garden machine 100.

In operation according to embodiments, the engagement between the pawls 531 and toothed portion 412 as a result of the biasing force of springs 532 discourages relative rotation between fastener 311 of implement securing apparatus 132 and shaft 111 in one direction (e.g., avoiding undesired unthreading of fastener 311 and threaded portion 411 during spinning of detachable implement 120). However, when an operator desires to remove implement securing apparatus 132 (e.g., to change detachable implement 120), portions of pawls 531 protruding from implement securing apparatus 132 may be depressed, the biasing force of springs 532 overcome, and the pawls pivoted to disengage from toothed portion 412. As pawls 531 pivot and disengage from toothed portion 412, implement securing apparatus 132 (and correspondingly fastener 311) may be rotated by hand and removed from shaft 111, wherein shaft 111 may be discouraged from rotating with the rotation of implement securing apparatus 132 through motor shaft locking apparatus 131 engaging shaft 111. In accordance with embodiments, the engagement of pawls 531 with toothed portion 412 of shaft 111 allows relative rotation in the opposite direction so that the operator may easily rotate implement securing apparatus 132 (and correspondingly fastener 311) with respect to shaft 111 in order to securely mount detachable implement 120. The fastener/shaft engagement implemented according to embodiments of the invention does not require fastener 311 to be tightened on shaft 111 very tight as the locking action of pawls 531 and toothed portion 412 may be utilized in discouraging loosening of implement securing apparatus 132 (e.g., fastener 311 becoming loose on shaft 111). Accordingly, torque applied by hand is sufficient for both tightening and loosening implement securing apparatus 132 of embodiments of the invention. As can be appreciated from the foregoing, motor shaft locking apparatus 131 and implement securing apparatus 132 of embodiments of tool-free implement change mechanism 130 allows an operator to interface implement securing apparatus 132 onto shaft 111, affixing detachable implement 120 thereto, by hand without need to use one or more wrenches or other, separate tools.

## Claims

1. A garden machine (100) comprising a system for removably coupling a detachable implement (120) to the garden machine (100), the system comprising:
a motor shaft locking apparatus (131) configured to engage a motor shaft assembly of the garden machine (100) and discourage movement of a shaft (111) of the motor shaft assembly, wherein the motor shaft locking apparatus (131) comprises one or more lockers (211) for engaging a first portion of the shaft assembly of the garden machine (100) discouraging shaft rotation when the motor shaft locking apparatus (131) engages the motor shaft assembly, and wherein the first portion of the shaft assembly is configured in correspondence with the one or more shaft locking apparatus for the discouraging shaft rotation,
wherein a locker (211) of the one or more lockers (211) is in communication with a safety interlock to prevent operation of the motor when the motor shaft locking apparatus (131) is engaged; and
wherein the one or more lockers (211) comprise a sliding locker (211) having a wide slot section (212) configured for unimpeded rotation of the shaft when the motor shaft locking apparatus (131) is disengaged and a narrow slot section (213) configured for discouraging rotation of the shaft when the motor shaft locking apparatus (131) is engaged; and
an implement securing apparatus (132) configured for lockedly affixing the detachable implement (120) to the shaft (111) of the motor shaft assembly through manual manipulation and for removal through manual manipulation when the motor shaft locking apparatus (131) is engaged.

2. The garden machine of claim 1, wherein the implement securing apparatus (132) and the motor shaft locking apparatus (131) cooperate to facilitate installation and removal of the detachable implement (120) from the shaft (111) without aid of tools other than the implement securing apparatus (132) and the motor shaft locking apparatus (131).

3. The garden machine of claim 1, wherein the motor shaft locking apparatus (131) further comprises:
a biased actuator (214) configured to encourage relative movement of the sliding locker (211) to interface with the first portion of the shaft assembly when the shaft (111) is insufficiently aligned with the narrow slot section (213); or
an energy storage apparatus (217) biasing the sliding locker (211) to a position in which the first portion of the shaft assembly is disposed in the wide slot section (212); or
both the biased actuator (214) and the energy storage apparatus (217).

4. The garden machine of claim 1, wherein the implement securing apparatus (132) comprises:
one or more manually operated releases controlling interfacing of the implement securing apparatus (132) with the shaft (111), wherein a second portion of the shaft (111) is configured in correspondence with the one or more manually operated releases for the controlling interfacing of the implement securing apparatus (132); and wherein the one or more manually operated releases optionally comprise a pawl (531) having a bias applied thereto encouraging the pawl (531) to engage the second portion of the shaft and discourage movement of the implement securing apparatus (132) during operation of the garden machine (100).

5. The garden machine of claim 1, wherein the garden machine (100) comprises a lawn mower and the detachable implement (120) comprises a grass cutting blade.

6. The garden machine of claim 1, wherein the detachable implement (120) is a detachable grass cutting blade and wherein the garden machine (100) is a lawn mower, the system comprising:
the motor shaft locking apparatus (131) being manually actuated; and
the implement securing apparatus (132) configured interface with a second portion of the shaft (111), wherein the implement securing apparatus (132) includes one or more manually operated releases controlling rotation of the implement securing apparatus (132) relative to the shaft (111), wherein the implement securing apparatus (132) and the motor shaft locking apparatus (131) cooperate to facilitate installation and removal of the detachable grass cutting blade from the shaft (111) without aid of tools other than the implement securing apparatus (132) and the motor shaft locking apparatus (131), and wherein the second portion of the shaft (111) is configured in correspondence with the one or more manually operated releases for the controlling interfacing of the implement securing apparatus (132); and wherein the one or more manually operated releases optionally comprise a pawl (531) having a bias applied thereto encouraging the pawl (531) to engage the second portion of the shaft and discourage movement of the implement securing apparatus (132) during operation of the garden machine (100).

7. The garden machine of claim 6, wherein the motor shaft locking apparatus (131) further comprises:
an energy storage apparatus (217) biasing the sliding locker (211) to a position in which the first portion of the shaft assembly is disposed in the wide slot section (212); or
a biased actuator (214) configured to encourage relative movement of the sliding locker (211) to interface with the first portion of the shaft assembly when the shaft is insufficiently aligned with the narrow slot section (213); or
both the biased actuator (214) and the energy storage apparatus (217).

8. The garden machine of claim 1, wherein the motor shaft locking apparatus (131) comprises a pull wire (215) and the sliding locker (211) is engageable by applying tension to the pull wire (215).

9. A method for removably coupling a detachable implement (120) to the garden machine (100) of any of claims 1 to 8, the method comprising:
engaging the motor shaft locking apparatus (131) through slidably moving a locker (211) of the one or more lockers (211) to discourage movement of the shaft (111) of the motor shaft assembly;
disengaging a manually operated release of the implement securing apparatus (132) affixing the detachable implement (120) to the shaft (111) of the motor shaft assembly through manual manipulation; and
twisting the implement securing apparatus (132) relative to the shaft (111) while the release is disengaged and the shaft (111) is discouraged from movement, wherein the implement securing apparatus (132) and the motor shaft locking apparatus (131) cooperate to facilitate removal of the detachable implement (120) from the shaft (111) without aid of tools other than the implement securing apparatus (132) and the motor shaft locking apparatus (131).

10. The method of claim 9, wherein:
the locker (211) engages a first portion of the shaft assembly of the garden machine (100) when the motor shaft locking apparatus (131) is engaged;
the first portion of the shaft assembly is configured in correspondence with the locker (211) for the discouraging shaft rotation; and
the locker (211) optionally comprises a wide slot section (212) configured for unimpeded rotation of the shaft (111) when the motor shaft locking apparatus (131) is disengaged and a narrow slot section (213) configured for discouraging rotation of shaft (111) when the motor shaft locking apparatus (131) is engaged.

11. The method of claim 10, further comprising:
applying a bias force encouraging relative movement of the locker to interface with the first portion of the shaft assembly when the shaft (111) is insufficiently aligned with the narrow slot (213) section.

12. The method of claim 10, further comprising:
overcoming a bias force encouraging the locker (211) to a position in which the first portion of the shaft assembly is disposed in the wide slot section (212) when engaging the motor shaft locking apparatus (131).

13. The method of claim 10, wherein:
a second portion of the shaft (111) is configured in correspondence with the one or more manually operated release for controlling interfacing of the implement securing apparatus (132); and
the disengaging the manually operated release optionally comprises overcoming a bias force applied to a pawl (531) of the manually operated release to pivot an end of the pawl (531) away from the second portion of the shaft (111).

14. The method of claim 9, wherein the garden machine (100) comprises a lawn mower and the detachable implement (120) comprises a grass cutting blade.

15. The method of claim 9, wherein engaging the motor shaft locking apparatus (131) through slidably moving a locker (211) of the one or more lockers (211) to discourage movement of the shaft (111) of the motor shaft assembly comprises applying tension to the pull wire (215).

## Patentansprüche

1. Gartenmaschine (100) mit einem System zum lösbaren Verbinden eines abnehmbaren Arbeitsgeräts (120) mit der Gartenmaschine (100), wobei das System umfasst:
eine Motorwellen-Verriegelungsvorrichtung (131), die dazu ausgebildet ist, in eine Motorwellenanordnung der Gartenmaschine (100) einzugreifen und eine Bewegung einer Welle (111) der Motorwellenanordnung zu verhindern, wobei die Motorwellen-Verriegelungsvorrichtung (131) eine oder mehrere Verriegelungen (211) zum Eingriff in einen ersten Abschnitt der Wellenanordnung der Gartenmaschine (100) umfasst, die eine Drehung der Welle verhindern, wenn die Motorwellen-Verriegelungsvorrichtung (131) in die Motorwellenanordnung eingreift, und wobei der erste Abschnitt der Wellenanordnung entsprechend der einen oder den mehreren Wellen-Verriegelungsvorrichtungen zum Verhindern einer Drehung der Welle ausgebildet ist,
wobei eine Verriegelung (211) der einen oder mehreren Verriegelungen (211) mit einer Sicherheitsverriegelung in Verbindung steht, um den Betrieb des Motors zu unterbinden, wenn die Motorwellen-Verriegelungsvorrichtung (131) in Eingriff ist; und
wobei die eine oder mehreren Verriegelungen (211) eine Schiebeverriegelung (211) umfassen, die einen breiten Schlitzabschnitt (212) aufweist, der dazu ausgebildet ist, eine ungehinderte Drehung der Welle zu ermöglichen, wenn die Motorwellen-Verriegelungsvorrichtung (131) außer Eingriff ist, sowie einen schmalen Schlitzabschnitt (213), der dazu ausgebildet ist, eine Drehung der Welle zu verhindern, wenn die Motorwellen-Verriegelungsvorrichtung (131) in Eingriff ist; und
eine Arbeitsgerät-Sicherungsvorrichtung (132), die dazu ausgebildet ist, durch manuelle Betätigung das abnehmbare Arbeitsgerät (120) verriegelt an der Welle (111) der Motorwellenanordnung zu sichern und durch manuelle Betätigung wieder freizugeben, wenn die Motorwellen-Verriegelungsvorrichtung (131) in Eingriff ist.

2. Gartenmaschine nach Anspruch 1,
wobei die Arbeitsgerät-Sicherungsvorrichtung (132) und die Motorwellen-Verriegelungsvorrichtung (131) zusammenwirken, um das Anbringen und Entfernen des abnehmbaren Arbeitsgeräts (120) von der Welle (111) ohne Zuhilfenahme von anderen Werkzeugen als der Arbeitsgerät-Sicherungsvorrichtung (132) und der Motorwellen-Verriegelungsvorrichtung (131) zu erleichtern.

3. Gartenmaschine nach Anspruch 1,
wobei die Motorwellen-Verriegelungsvorrichtung (131) ferner umfasst:
einen beaufschlagten Aktuator (214), der dazu ausgebildet ist, eine Relativbewegung der Schiebeverriegelung (211) zu bewirken, um sie mit dem ersten Abschnitt der Wellenanordnung zu koppeln, wenn die Welle (111) nicht ausreichend auf den schmalen Schlitzabschnitt (213) ausgerichtet ist; oder
eine Energiespeichervorrichtung (217), die die Schiebeverrieglung (211) in eine Position beaufschlagt, in welcher der erste Abschnitt der Wellenanordnung im breiten Schlitzabschnitt (212) angeordnet ist; oder
sowohl den beaufschlagten Aktuator (214) als auch die Energiespeichervorrichtung (217).

4. Gartenmaschine nach Anspruch 1,
wobei die Arbeitsgerät-Sicherungsvorrichtung (132) umfasst:
eine oder mehrere manuell betätigte Entriegelungen, die die Kopplung der Arbeitsgerät-Sicherungsvorrichtung (132) mit der Welle (111) steuern,
wobei ein zweiter Abschnitt der Welle (111) entsprechend der einen oder den mehreren manuell betätigten Entriegelungen zur Steuerung der Kopplung der Arbeitsgerät-Sicherungsvorrichtung (132) ausgebildet ist; und
wobei die eine oder mehreren manuell betätigten Entriegelungen optional eine Sperrklinke (531) umfassen, die einer Beaufschlagung unterliegt, um die Sperrklinke (531) zu veranlassen, in den zweiten Abschnitt der Welle einzugreifen und eine Bewegung der Arbeitsgerät-Sicherungsvorrichtung (132) während des Betriebs der Gartenmaschine (100) zu verhindern.

5. Gartenmaschine nach Anspruch 1,
wobei die Gartenmaschine (100) einen Rasenmäher umfasst und das abnehmbare Arbeitsgerät (120) ein Grasschneidmesser umfasst.

6. Gartenmaschine nach Anspruch 1,
wobei das abnehmbare Arbeitsgerät (120) ein abnehmbares Grasschneidemesser ist und wobei die Gartenmaschine (100) ein Rasenmäher ist, wobei das System umfasst:
die manuell betätigte Motorwellen-Verriegelungsvorrichtung (131); und
die Arbeitsgerät-Sicherungsvorrichtung (132), die dazu ausgebildet ist, sich mit einem zweiten Abschnitt der Welle (111) zu koppeln,
wobei die Arbeitsgerät-Sicherungsvorrichtung (132) eine oder mehrere manuell betätigte Entriegelungen umfasst, die die Drehung der Arbeitsgerät-Sicherungsvorrichtung (132) relativ zur Welle (111) steuern,
wobei die Arbeitsgerät-Sicherungsvorrichtung (132) und die Motorwellen-Verriegelungsvorrichtung (131) zusammenwirken, um das Anbringen und Entfernen des abnehmbaren Grasschneidmessers von der Welle (111) ohne Zuhilfenahme von anderen Werkzeugen als der Arbeitsgerät-Sicherungsvorrichtung (132) und der Motorwellen-Verriegelungsvorrichtung (131) zu erleichtern, und
wobei der zweite Abschnitt der Welle (111) entsprechend der einen oder den mehreren manuell betätigten Entriegelungen zur gesteuerten Kopplung der Arbeitsgerät-Sicherungsvorrichtung (132) ausgebildet ist; und
wobei die eine oder mehreren manuell betätigten Entriegelungen optional eine Sperrklinke (531) umfassen, die einer Beaufschlagung unterliegt, um die Sperrklinke (531) zu veranlassen, in den zweiten Abschnitt der Welle einzugreifen und eine Bewegung der Arbeitsgerät-Sicherungsvorrichtung (132) während des Betriebs der Gartenmaschine (100) zu verhindern.

7. Gartenmaschine nach Anspruch 6,
wobei die Motorwellen-Verriegelungsvorrichtung (131) ferner umfasst:
eine Energiespeichervorrichtung (217), die die Schiebeverrieglung (211) in eine Position beaufschlagt, in welcher der erste Abschnitt der Wellenanordnung im breiten Schlitzabschnitt (212) angeordnet ist; oder
einen beaufschlagten Aktuator (214), der dazu ausgebildet ist, eine Relativbewegung der Schiebeverriegelung (211) zu bewirken, um sie mit dem ersten Abschnitt der Wellenanordnung zu koppeln, wenn die Welle (111) nicht ausreichend auf den schmalen Schlitzabschnitt (213) ausgerichtet ist; oder
sowohl den beaufschlagten Aktuator (214) als auch die Energiespeichervorrichtung (217).

8. Gartenmaschine nach Anspruch 1,
wobei die Motorwellen-Verriegelungsvorrichtung (131) einen Zugdraht (215) umfasst und wobei die Schiebeverrieglung (211) durch Aufbringen einer Spannung auf den Zugdraht (215) in Eingriff gebracht werden kann.

9. Verfahren zum lösbaren Verbinden eines abnehmbaren Arbeitsgeräts (120) mit der Gartenmaschine (100) nach einem der Ansprüche 1 bis 8, wobei das Verfahren umfasst:
Ineingriffbringen der Motorwellen-Verriegelungsvorrichtung (131) durch Verschieben einer Verriegelung (211) der einen oder mehreren Verriegelungen (211), um eine Bewegung der Welle (111) der Motorwellenanordnung zu verhindern;
Außereingriffbringen einer manuell betätigten Entriegelung der Arbeitsgerät-Sicherungsvorrichtung (132), die das abnehmbare Arbeitsgerät (120) an der Welle (111) der Motorwellenanordnung durch manuelle Betätigung sichert; und
Drehen der Arbeitsgerät-Sicherungsvorrichtung (132) relativ zur Welle (111), während die Entriegelung außer Eingriff ist und die Welle (111) an einer Bewegung gehindert wird,
wobei die Arbeitsgerät-Sicherungsvorrichtung (132) und die Motorwellen-Verriegelungsvorrichtung (131) zusammenwirken, um das Entfernen des abnehmbaren Arbeitsgeräts (120) von der Welle (111) ohne Zuhilfenahme von anderen Werkzeugen als der Arbeitsgerät-Sicherungsvorrichtung (132) und der Motorwellen-Verriegelungsvorrichtung (131) zu erleichtern.

10. Verfahren nach Anspruch 9, wobei:
die Verriegelung (211) in einen ersten Abschnitt der Wellenanordnung der Gartenmaschine (100) eingreift, wenn die Motorwellen-Verriegelungsvorrichtung (131) in Eingriff ist;
der erste Abschnitt der Wellenanordnung entsprechend der Verriegelung (211) zur Verhinderung einer Drehung der Welle ausgebildet ist; und
die Verriegelung (211) optional einen breiten Schlitzabschnitt (212) aufweist, der dazu ausgebildet ist, eine ungehinderte Drehung der Welle (111) zu ermöglichen, wenn die Motorwellen-Verriegelungsvorrichtung (131) außer Eingriff ist, sowie einen schmalen Schlitzabschnitt (213), der dazu ausgebildet ist, eine Drehung der Welle (111) zu verhindern, wenn die Motorwellen-Verriegelungsvorrichtung (131) in Eingriff ist.

11. Verfahren nach Anspruch 10, ferner umfassend:
Aufbringen einer Beaufschlagungskraft, die eine Relativbewegung der Verriegelung bewirkt, um sie mit dem ersten Abschnitt der Wellenanordnung zu koppeln, wenn die Welle (111) nicht ausreichend auf den schmalen Schlitzabschnitt (213) ausgerichtet ist.

12. Verfahren nach Anspruch 10, ferner umfassend:
Überwinden einer Beaufschlagungskraft, wodurch die Verriegelung (211) in eine Position gebracht wird, in welcher der erste Abschnitt der Wellenanordnung in dem breiten Schlitzabschnitt (212) bei Eingriff der Motorwellen-Verriegelungsvorrichtung (131) angeordnet ist.

13. Verfahren nach Anspruch 10, wobei:
ein zweiter Abschnitt der Welle (111) entsprechend der einen oder den mehreren manuell betätigten Entriegelungen zur Steuerung der Kopplung der Arbeitsgerät-Sicherungsvorrichtung (132) ausgebildet ist; und
das Außereingriffbringen der manuell betätigten Entriegelung optional das Überwinden einer auf eine Sperrklinke (531) der manuell betätigten Entriegelung ausgeübten Beaufschlagungskraft umfasst, um ein Ende der Sperrklinke (531) von dem zweiten Abschnitt der Welle (111) wegzuschwenken.

14. Verfahren nach Anspruch 9,
wobei die Gartenmaschine (100) einen Rasenmäher umfasst und das abnehmbare Arbeitsgerät (120) ein Grasschneidemesser umfasst.

15. Verfahren nach Anspruch 9,
wobei das Ineingriffbringen der Motorwellen-Verriegelungsvorrichtung (131) durch Verschieben einer Verriegelung (211) der einen oder mehreren Verriegelungen (211), um eine Bewegung der Welle (111) der Motorwellenanordnung zu verhindern, das Aufbringen einer Spannung auf den Zugdraht (215) umfasst.

## Revendications

1. Machine de jardinage (100) comprenant un système permettant de relier de manière amovible un accessoire détachable (120) à la machine de jardinage (100), le système comprenant :
un dispositif de verrouillage d'arbre moteur (131) conçu pour venir en engagement avec un ensemble d'arbre moteur de la machine de jardinage (100) et pour empêcher le mouvement d'un arbre (111)de l'ensemble d'arbre moteur,
dans laquelle
le dispositif de verrouillage d'arbre moteur (131) comprend un ou plusieurs verrous (211) destinés à venir en engagement avec une première partie de l'ensemble d'arbre de la machine de jardinage (100) pour empêcher la rotation de l'arbre lorsque le dispositif de verrouillage d'arbre moteur (131) est en engagement avec l'ensemble d'arbre moteur, et
la première partie de l'ensemble d'arbre est conçue en correspondance avec le ou les dispositifs de verrouillage d'arbre pour empêcher la rotation de l'arbre,
un verrou (211) parmi le ou les verrous (211) est en communication avec un verrouillage de sécurité pour inhiber le fonctionnement du moteur lorsque le dispositif de verrouillage d'arbre moteur (131) est engagé ; et
le ou les verrous (211) comprennent un verrou coulissant (211) comportant une section à fente large (212), conçue pour permettre une rotation sans entrave de l'arbre lorsque le dispositif de verrouillage d'arbre moteur (131) est désengagé, et une section à fente étroite (213), conçue pour empêcher la rotation de l'arbre lorsque le dispositif de verrouillage d'arbre moteur (131) est engagé ; et
un dispositif de fixation d'accessoire (132) conçu pour fixer de manière verrouillable l'accessoire détachable (120) à l'arbre (111) de l'ensemble d'arbre moteur par une manipulation manuelle, et pour le retirer par une manipulation manuelle lorsque le dispositif de verrouillage d'arbre moteur (131) est engagé.

2. Machine de jardinage selon la revendication 1,
dans laquelle le dispositif de fixation d'accessoire (132) et le dispositif de verrouillage d'arbre moteur (131) coopèrent pour faciliter la mise en place et le retrait de l'accessoire détachable (120) de l'arbre (111) sans recourir à des outils autres que le dispositif de fixation d'accessoire (132) et le dispositif de verrouillage d'arbre moteur (131).

3. Machine de jardinage selon la revendication 1,
dans laquelle le dispositif de verrouillage d'arbre moteur (131) comprend en outre :
un actionneur sollicité (214) conçu pour entraîner le mouvement relatif du verrou coulissant (211) afin de le coupler à la première partie de l'ensemble d'arbre lorsque l'arbre (111) n'est pas suffisamment aligné avec la section à fente étroite (213) ; ou
un dispositif de stockage d'énergie (217) sollicitant le verrou coulissant (211) vers une position dans laquelle la première partie de l'ensemble d'arbre est disposée dans la section à fente large (212) ; ou
à la fois l'actionneur sollicité (214) et le dispositif de stockage d'énergie (217).

4. Machine de jardinage selon la revendication 1,
dans laquelle le dispositif de fixation d'accessoire (132) comprend :
un ou plusieurs éléments de déverrouillage à commande manuelle qui commandent le couplage du dispositif de fixation d'accessoire (132) à l'arbre (111), sachant que
une deuxième partie de l'arbre (111) est conçue en correspondance avec le ou les éléments de déverrouillage à commande manuelle pour commander le couplage du dispositif de fixation d'accessoire (132) ; et
le ou les dispositifs de déverrouillage à commande manuelle comprennent en option un cliquet (531) soumis à une force de sollicitation qui amène le cliquet (531) à venir en engagement avec la deuxième partie de l'arbre et qui empêche le mouvement du dispositif de fixation d'accessoire (132) pendant le fonctionnement de la machine de jardinage (100).

5. Machine de jardinage selon la revendication 1,
dans laquelle la machine de jardinage (100) comprend une tondeuse à gazon et l'accessoire détachable (120) comprend une lame de coupe d'herbe.

6. Machine de jardinage selon la revendication 1,
dans laquelle l'accessoire détachable (120) est une lame détachable de coupe d'herbe et la machine de jardinage (100) est une tondeuse à gazon, le système comprenant :
le dispositif de verrouillage d'arbre moteur (131) actionné manuellement ; et
le dispositif de fixation d'accessoire (132) conçu pour se coupler à une deuxième partie de l'arbre (111), sachant que
le dispositif de fixation d'accessoire (132) comprend un ou plusieurs éléments de déverrouillage à commande manuelle qui commandent la rotation du dispositif de fixation d'accessoire (132) par rapport à l'arbre (111), le dispositif de fixation d'accessoire (132) et le dispositif de verrouillage d'arbre moteur (131) coopèrent pour faciliter la mise en place et le retrait de la lame détachable de coupe d'herbe de l'arbre (111) sans recourir à des outils autres que le dispositif de fixation d'accessoire (132) et le dispositif de verrouillage d'arbre moteur (131), et
la deuxième partie de l'arbre (111) est conçue en correspondance avec le ou les éléments de déverrouillage à commande manuelle pour commander le couplage du dispositif de fixation d'accessoire (132) ; et
le ou les éléments de déverrouillage à commande manuelle comprennent en option un cliquet (531) soumis à une force de sollicitation qui amène le cliquet (531) à venir en engagement avec la deuxième partie de l'arbre et qui empêche le mouvement du dispositif de fixation d'accessoire (132) pendant le fonctionnement de la machine de jardinage (100).

7. Machine de jardinage selon la revendication 6,
dans laquelle le dispositif de verrouillage d'arbre moteur (131) comprend en outre :
un dispositif de stockage d'énergie (217) sollicitant le verrou coulissant (211) vers une position dans laquelle la première partie de l'ensemble d'arbre est disposée dans la section à fente large (212) ; ou
un actionneur sollicité (214) conçu pour entraîner le mouvement relatif du verrou coulissant (211) afin de le coupler à la première partie de l'ensemble d'arbre lorsque l'arbre n'est pas suffisamment aligné avec la section à fente étroite (213) ; ou
à la fois l'actionneur sollicité (214) et le dispositif de stockage d'énergie (217).

8. Machine de jardinage selon la revendication 1,
dans laquelle le dispositif de verrouillage d'arbre moteur (131) comprend un câble de traction (215) et le verrou coulissant (211) peut être engagé par application d'une tension sur le câble de traction (215).

9. Procédé pour relier de manière amovible un accessoire détachable (120) à la machine de jardinage (100) selon l'une des revendications 1 à 8,
le procédé comprenant :
l'engagement du dispositif de verrouillage d'arbre moteur (131) par déplacement coulissant d'un verrou (211) parmi un ou plusieurs verrous (211), afin d'empêcher le mouvement de l'arbre (111) de l'ensemble d'arbre moteur ;
le désengagement d'un élément de déverrouillage à commande manuelle du dispositif de fixation d'accessoire (132), fixant l'accessoire détachable (120) à l'arbre (111) de l'ensemble d'arbre moteur par une manipulation manuelle ; et
la rotation du dispositif de fixation d'accessoire (132) par rapport à l'arbre (111), l'élément de déverrouillage étant désengagé et l'arbre (111) étant empêché de se déplacer, sachant que
le dispositif de fixation d'accessoire (132) et le dispositif de verrouillage d'arbre moteur (131) coopèrent pour faciliter le retrait de l'accessoire détachable (120) de l'arbre (111) sans recourir à des outils autres que le dispositif de fixation d'accessoire (132) et le dispositif de verrouillage d'arbre moteur (131).

10. Procédé selon la revendication 9, dans lequel :
le verrou (211) vient en engagement avec une première partie de l'ensemble d'arbre de la machine de jardinage (100) lorsque le dispositif de verrouillage d'arbre moteur (131) est engagé ;
la première partie de l'ensemble d'arbre est conçue en correspondance avec le verrou (211) pour empêcher la rotation de l'arbre ; et
le verrou (211) comprend en option une section à fente large (212), conçue pour permettre la rotation sans entrave de l'arbre (111) lorsque le dispositif de verrouillage d'arbre moteur (131) est désengagé, et une section à fente étroite (213), conçue pour empêcher la rotation de l'arbre (111) lorsque le dispositif de verrouillage d'arbre moteur (131) est engagé.

11. Procédé selon la revendication 10, comprenant en outre :
l'application d'une force de sollicitation qui entraîne un mouvement relatif du verrou afin de le coupler à la première partie de l'ensemble d'arbre lorsque l'arbre (111) n'est pas suffisamment aligné avec la section à fente étroite (213).

12. Procédé selon la revendication 10, comprenant en outre :
le fait de surmonter une force de sollicitation, amenant le verrou (211) vers une position dans laquelle la première partie de l'ensemble d'arbre est disposée dans la section à fente large (212) lors de l'engagement du dispositif de verrouillage d'arbre moteur (131).

13. Procédé selon la revendication 10, dans lequel :
une deuxième partie de l'arbre (111) est conçue en correspondance avec le ou les éléments de déverrouillage à commande manuelle afin de commander le couplage du dispositif de fixation d'accessoire (132) ; et
le désengagement de l'élément de déverrouillage à commande manuelle comprend, en option, le fait de surmonter une force de sollicitation appliquée à un cliquet (531) du dispositif de déverrouillage à commande manuelle, afin de faire pivoter une extrémité du cliquet (531) en éloignement de la deuxième partie de l'arbre (111).

14. Procédé selon la revendication 9,
dans lequel la machine de jardinage (100) comprend une tondeuse à gazon et l'accessoire détachable (120) comprend une lame de coupe d'herbe.

15. Procédé selon la revendication 9,
dans lequel l'engagement du dispositif de verrouillage d'arbre moteur (131) par déplacement coulissant d'un verrou (211) parmi un ou plusieurs verrous (211) afin d'empêcher le mouvement de l'arbre (111) de l'ensemble d'arbre moteur comprend l'application d'une tension au câble de traction (215).
